# FASCICULE DE BREVET EUROPEEN

(11) **EP 0 512 922 B1**
(45) Date de publication et mention de la délivrance du brevet: **16.07.1997**
(21) Numéro de dépôt: 92401272.7
(22) Date de dépôt: 07.05.1992
(51) Int. Cl.: C03B 29/12, C03B 23/03, C03B 27/044

(54) **Four continu pour le chauffage de vitrages à la température de bombage et/ou de trempe**
Kontinuierlicher Ofen zum Heizen von Glasscheiben auf ihre Biege- und/oder Härtungstemperatur
Continuously working furnace for heating glass plates to their bending- and/or tempering temperature

(30) Priorité: 10.05.1991 DE 4115235
(43) Date de publication de la demande: 11.11.1992
(73) Titulaire: SAINT-GOBAIN VITRAGE, 92400 Courbevoie (FR); VEGLA Vereinigte Glaswerke GmbH, D-52066 Aachen (DE)
(72) Inventeur: Kuster, Hans Werner, W-5100 Aachen (DE); Lacoste, Jean-Pierre, W-5100 Aachen (DE); Vanaschen, Luc, B-4700 Eupen (BE)
(74) Mandataire: Menes, Catherine

(56) Documents cités:
- FR-A- 538 843
- FR-A- 999 090
- US-A- 3 087 316
- US-A- 3 223 501
- US-A- 4 204 853

## Description

La présente invention concerne un four continu pour le chauffage de vitrages à leur température de bombage et/ou de trempe, comportant une sole de support à gaz chaud et un dispositif entraîneur agissant sur les bords des vitrages pour les transporter au-dessus de la sole de support à gaz chaud à partir d'un poste de chargement jusqu'à un poste de déchargement ou de transfert. L'invention a trait, en outre, à un tel four comportant une installation de bombage et de trempe pour des vitrages.

Dans le four continu connu pourvu d'une sole de support à gaz chaud (voir, par exemple, le brevet US-A-3.223.501), la sole de support à gaz chaud plane est d'une configuration rectiligne et est légèrement inclinée par rapport à l'horizontale dans le sens transversal à celui du transport des vitrages sont entraînés par des rouleaux dont les axes de rotation sont perpendiculaires au plan de la sole de support, disposés le long du bord longitudinal le plus bas de la sole de support. Sous l'effet de la composante des forces agissant dans le sens de l'inclinaison du plan de transport, (le poids propre des vitrages et leur disposition flottante sur la sole de support), ces vitrages sont en contact par un bord longitudinal avec les rouleaux entraîneurs et sont transportés par friction par les rouleaux entraîneurs. A l'extrémité du chargement du four, les vitrages sont déposés sur la sole de support à gaz chaud ou sont transférés par des rouleaux transporteurs sur cette sole de support à gaz chaud. Le déchargement ou le transfert des vitrages chauffés de la sole de support à gaz chaud s'effectue à l'autre extrémité du four rectiligne, c'est-à-dire à une distance plus ou moins grande de l'endroit d'alimentation du four.

Dans un four continu pour vitrages, il faut, même lorsque le four est entièrement automatisé, surveiller constamment le poste de chargement et le poste de déchargement du four. Un four continu linéaire présente cependant une longueur relativement grande et les postes de chargement et de déchargement sont, par conséquent, si éloignés l'un de l'autre que la surveillance de ces deux postes exige un contrôleur ou un opérateur pour chacun d'eux.

L'invention a pour but de procurer un four continu pour le chauffage de vitrages à progression continue ou pas à pas, qui, à capacité égale par rapport à un four continu linéaire correspondant, puisse, grâce à son mode de construction, être mis en oeuvre avec moins de personnel que les fours continus connus.

Le four continu précité est, conforme à l'invention, caractérisé en ce qu'il comporte une sole de support à coussin de gaz chaud de forme annulaire orientée horizontalement et un dispositif entraîneur concentrique à la sole annulaire comportant des organes entraîneurs parcourant un trajet circulaire qui saisissent chacun un vitrage en au moins trois points et le déplacent suivant un trajet circulaire du poste de chargement vers le poste de déchargement.

Dans un tel four circulaire, les postes de chargement et de déchargement sont disposés l'un près de l'autre et peuvent être commandés et/ou surveillés par un seul et même opérateur. De ce fait, la mise en oeuvre d'un tel four ou d'une installation de bombage et/ou de trempe pourvue d'un tel four est possible dans un espace relativement restreint et avec un minimum de personnel, donc d'une manière extrêmement économique.

Des réalisations adéquates et des développements avantageux de l'invention ressortiront des revendications dépendantes et de la description suivante d'un exemple de réalisation préféré donnée avec référence aux dessins annexés, dans lesquels :
* **figure 1** : une vue d'ensemble en perspective d'une installation conforme à l'invention pour la fabrication de vitrages bombés et trempés,
* **figure 2** : une vue en plan de l'installation illustrée sur la figure 1,
* **figure 3** : une vue en coupe dans le plan vertical III-III de la figure 2,

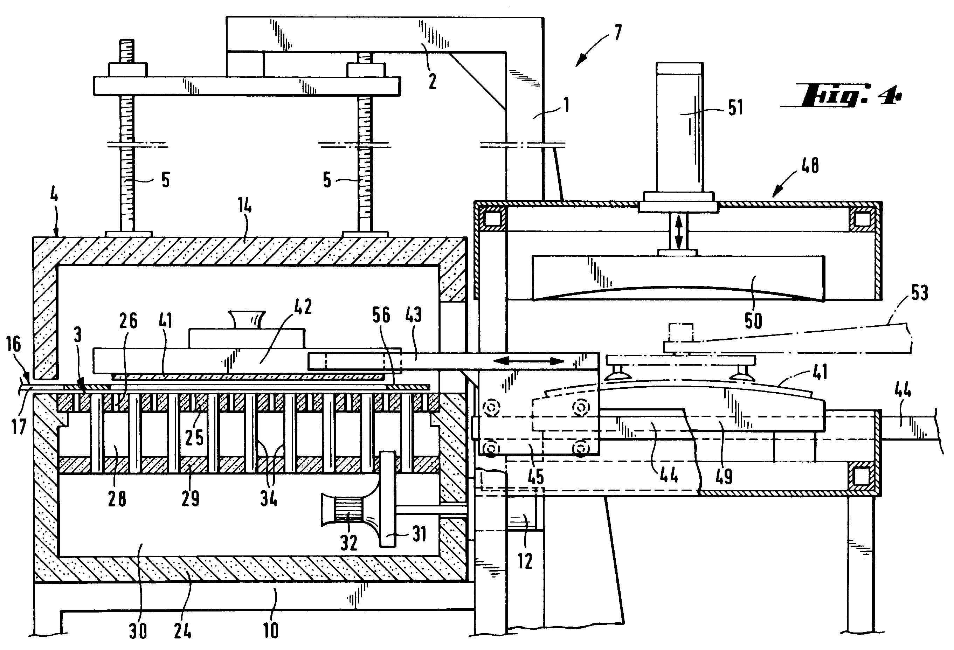

* **figure 4** : une vue en coupe dans le plan vertical IV-IV de la figure 2,
* **figure 5** : une vue d'un dispositif entraîneur ayant la forme d'un gabarit.

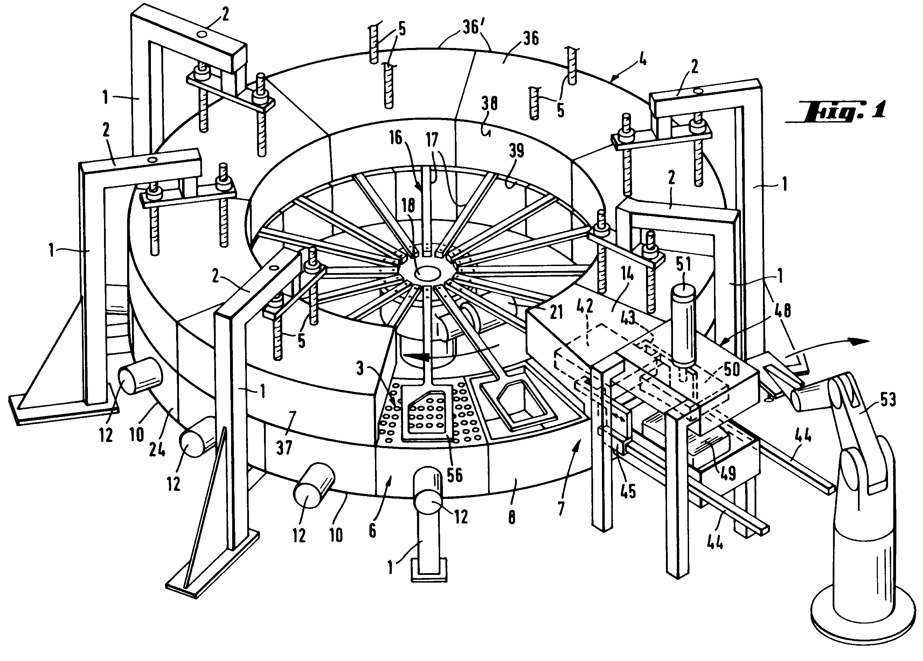

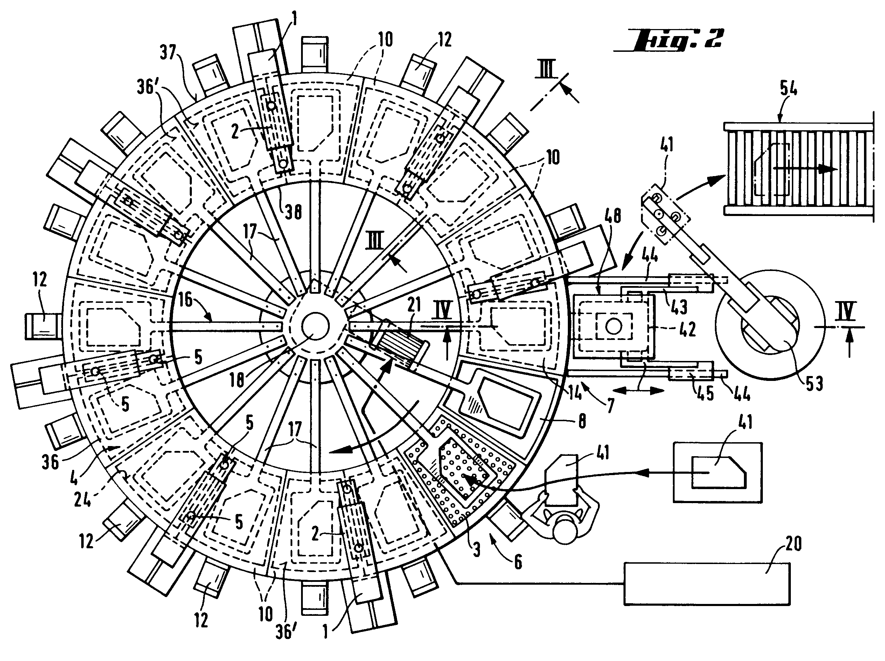

Comme le montrent les figures 1 et 2, le four comprend une construction de support formée de poteaux 1 et de bras de potence 2 qui supportent, d'une part, la sole de support à gaz chaud 3 et, d'autre part, la partie supérieure 4 du four. La partie supérieure 4 du four est subdivisée en segments individuels qui sont chacun fixés à des tiges filetées 5 et peuvent être levés séparément. La sole de support à gaz chaud 3 est de forme annulaire et la surface annulaire, qui est percée de trous d'éjection de gaz et de trous de débit de gaz, est orientée horizontalement et forme une surface plane. La sole de support annulaire 3 ne constitue pas un anneau fermé, mais est interrompue entre le poste de chargement 6 et le poste de déchargement 7. A cet endroit, entre le poste de chargement 6 et le poste de déchargement 7, un récipient collecteur de débris 8 peut, par exemple, être installé pour recueillir, le cas échéant, les débris de verre formés lors d'un bris de verre.

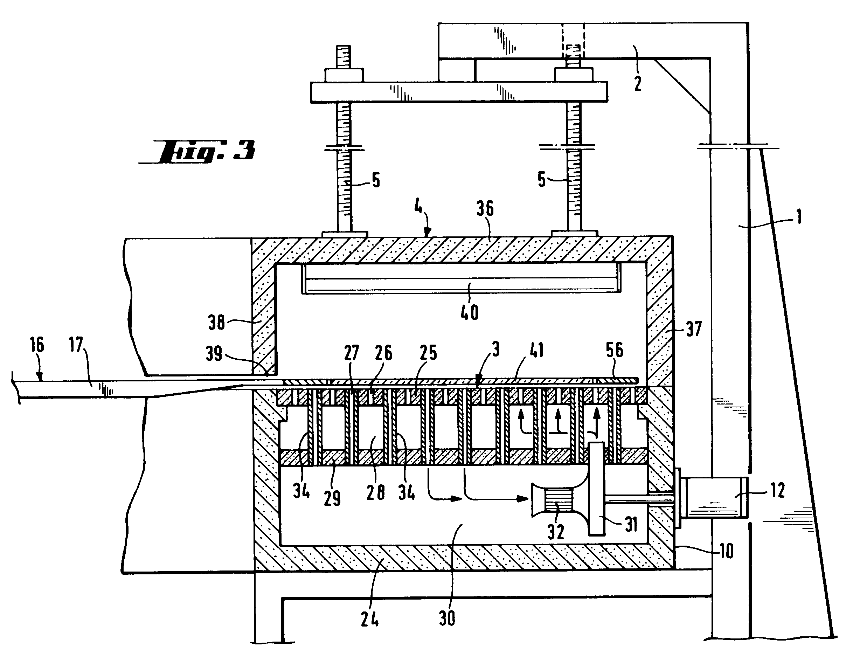

L'espace situé en dessous de la sole de support à gaz chaud 3 proprement dite est subdivisé en une série de segments, en l'occurrence, dans le cas représenté, au total quinze segments annulaires 10 qui sont tous de la même grandeur. A l'endroit du seizième serpent annulaire se trouve le collecteur de débris 8. Chacun des quinze segments annulaires 10 forme, en dessous de la sole de support à gaz chaud 3, une chambre close dans laquelle le flux de gaz chaud est produit chaque fois au moyen d'un ventilateur entraîné par un moteur 12. La température du flux de gaz chaud peut être réglée séparément dans chaque segment annulaire. Le cas échéant également, c'est également le cas pour la pression du gaz. La structure des segments du four sera encore décrite en détail en référence à la figure 3.

Dans le poste de chargement 6, dans lequel la sole de support à gaz chaud 3 est à la température ambiante ou à une température qui n'est que légèrement supérieure à la température ambiante, aucune construction de ciel n'est présente, de sorte que les vitrages peuvent être mis en place librement, sans entrave sur la sole de support à gaz. La mise en place des vitrages peut s'effectuer à la main ou à l'aide d'un dispositif de chargement automatique. En revanche, dans le poste de déchargement 7, la construction de ciel comporte une enveloppe 14 à isolation thermique qui empêche les vitrages de se refroidir dans le poste de déchargement 7.

Dans le four représenté, le transport des vitrages à travers ce four s'effectue avantageusement pas à pas, et ce, chaque fois dans la mesure de l'angle correspondant à un segment annulaire. Le transport peut cependant aussi s'effectuer en continu, à vitesse constante, auquel cas l'opération de chargement et l'opération de déchargement doivent être synchronisées soigneusement avec l'opération de déplacement des vitrages. De même, le transport des vitrages au-dessus de la sole de support à gaz chaud peut également être effectué à une vitesse qui varie périodiquement, par exemple à une vitesse angulaire élevée d'un segment annulaire au suivant et à une vitesse angulaire chaque fois fortement réduite dans la dernière section du parcours, pour faciliter l'opération de déchargement et l'opération de chargement.

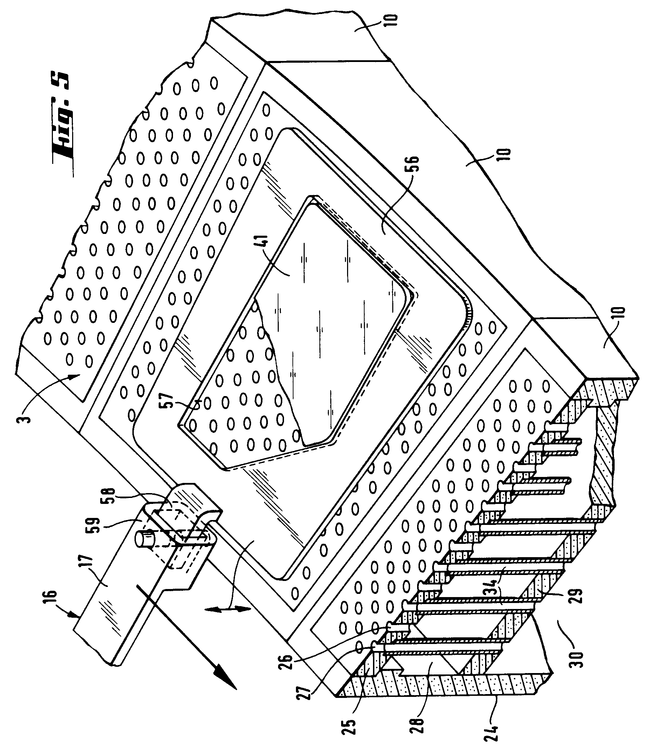

Le transport des vitrages au-dessus de la sole de support à gaz chaud 3 est assuré par un carrousel 16 comportant au total seize bras radiaux 17 séparés les uns des autres, chaque fois du même écart angulaire. Le carrousel 16 est monté à rotation sur un axe de rotation vertical 18. L'axe de rotation 18 est disposé au centre de la surface annulaire de la sole de support à gaz chaud 3. Un moteur électrique 21 piloté par une commande de processus 20 sert à l'entraînement en rotation continu ou pas à pas du carrousel 16. Chaque bras 17 du carrousel 16 porte, à son extrémité libre, un entraîneur approprié qui est chaque fois en contact en au moins trois points avec un vitrage et guide celui-ci dans un trajet circulaire au-dessus de la sole à gaz chaud. Une construction particulièrement adéquate d'un entraîneur sera décrite en détail plus loin avec référence à la figure 5.

Au lieu de se présenter sous la forme d'un carrousel à entraînement central, le dispositif entraîneur peut également être conçu de telle sorte qu'une chaîne sans fin parcourant un trajet circulaire concentrique au four soit prévue le long de la paroi interne du four, à l'extérieur de celui-ci, les organes entraîneurs qui s'étendent dans le four étant montés sur cette chaîne. La chaîne sans fin peut être entraînée à la vitesse souhaitée ou au rythme souhaité, par exemple au moyen d'un pignon entraîné qui est en prise avec la chaîne.

La structure du four et la construction de la sole de support à gaz chaud sont illustrées sur la figure 3 par leurs parties essentielles. La partie inférieure du four formant la sole de support par coussin à gaz chaud 3 comporte une enveloppe à isolation thermique adéquate 24 dont le fond et les parois latérales ne sont pas perforés. A sa partie supérieure, l'enveloppe 24 est fermée par une plaque plane 25 en matière réfractaire, qui est percée, à intervalles réguliers, de trous d'éjection de gaz 26 et de trous d'aspiration de gaz 27. Les trous d'éjection de gaz 26 raccordent la face supérieure de la plaque 25 à l'espace intermédiaire 28 en dessous de cette plaque 25. Cet espace intermédiaire 28 est fermé vers le bas par une paroi intermédiaire 29 installée parallèlement à la plaque 25. En dessous de la paroi intermédiaire 29 se trouve un espace 30 dans lequel est prévu un ventilateur 31. Le ventilateur 31 est entraîné par le moteur électrique 12 monté sur la paroi extérieure de l'enveloppe 24. Devant l'orifice d'aspiration du ventilateur 31 est installé un registre de chauffage électrique 32 qui sert à chauffer l'air aspiré à la température voulue.

Le flux d'air chaud produit par le ventilateur 31 est refoulé dans l'espace intermédiaire 28 et y crée une surpression de valeur adéquate pour que l'air chaud s'échappe par les trous 26 de la plaque 25 et forme le coussin d'air chaud souhaité pour le transport sans friction des vitrages. Le gaz chaud s'écoule en dessous des vitrages à travers les trous d'aspiration 27 situés entre les trous d'éjection 26 et revient, par les tubes 34 raccordés aux trous d'aspiration 27 et traversant la paroi intermédiaire 29, dans l'espace 30 situé en dessous de la paroi intermédiaire 29. L'air chaud circule ainsi en circuit fermé, de sorte que, lorsque la température de travail du four est atteinte, seul un faible apport de chaleur par le registre de chauffage 32 est nécessaire pour chauffer l'air.

La construction de ciel 4 du four comprend également une enveloppe 36 à isolation thermique adéquate, qui est avantageusement subdivisée en segments individuels 36′, qui peuvent être élevés séparément, lorsqu'il est nécessaire d'accéder à la sole de support à gaz chaud. Alors que la paroi latérale extérieure 37 de l'enveloppe 36 prend appui sur la partie inférieure du four et assure ainsi une fermeture étanche de la paroi latérale extérieure du four, la paroi latérale intérieure 38 de l'enveloppe 36 se termine au-dessus de la partie inférieure du four et forme un interstice continu 39 par lequel les bras 17 du carrousel pénètrent dans le four. A l'intérieur de l'enveloppe 36 sont installés des appareils de chauffage électrique à rayonnement 40 qui servent à chauffer les vitrages à la température chaque fois souhaitée dans les diverses zones.

Après avoir parcouru le four, les vitrages ont atteint la température souhaitée de, par exemple, 650°C et sont enlevés du four dans le poste de déchargement 7. L'enlèvement des vitrages chauffés 41 s'effectue, dans le cas représenté, à l'aide d'un plateau aspirant déplaçable 42. Le plateau aspirant 42 peut être déplacé, par l'intermédiaire d'un support adéquat 43 et d'un chariot 45 mobile sur des rails 44, d'une manière telle que les vitrages 41 soient plaqués contre le plateau aspirant 42 par la force d'aspiration et soient transférés dans un poste de traitement situé à proximité du four.

Le poste de traitement 48 illustré schématiquement sur les figures 1 et 2 est un poste de bombage et de trempe combiné, dans lequel les vitrages chauffés sont bombés en une seule opération entre deux formes de bombage refroidies à l'eau 49, 50 et sont trempés thermiquement par un refroidissement brusque. Alors que la forme de bombage refroidie inférieure 49 est montée fixe, la forme de bombage supérieure 50 est montée mobile dans le sens vertical et peut être élevée et abaissée par un vérin à fluide sous pression 51. Pendant que la forme de bombage supérieure 50 se trouve dans sa position élevée, le vitrage chauffé est déposé au moyen du plateau aspirant 42 sur la forme de bombage inférieure. Ensuite, le plateau aspirant 42 revient dans sa position de départ et la forme de bombage supérieure 50 est pressée à l'aide du vérin 51 contre la forme de bombage inférieure 49, de sorte que le vitrage est bombé et trempé.

Des dispositifs appropriés pour, simultanément, bomber et tremper un vitrage par contact sont connus comme tels et décrits en détail, par exemple, dans les documents DE 40**19**179 A1 et DE 40 19 181 A1. Bien entendu, en lieu et place du dispositif de bombage et de trempe par contact représenté, n'importe quel autre dispositif de bombage et/ou de trempe peut cependant être adapté latéralement au poste de déchargement 7.

Après que la forme de bombage 50 a été amenée dans sa position supérieure, les vitrages bombés et trempés sont enlevés de la forme de bombage inférieure 49 et transférés sur un transporteur 54 à l'aide d'un robot 53.

Une construction particulièrement avantageuse des moyens d'entraînement pour les vitrages est illustrée sur la figure 5. L'organe entraîneur monté chaque fois sur un bras 17 du carrousel est constitué d'un gabarit 56 en tôle d'acier réfractaire dont le contour intérieur 57 correspond au contour extérieur des vitrages. Comme le vitrage, le gabarit 56 flotte sur la sole de support à gaz chaud, de sorte que l'on obtient ainsi un guidage en hauteur automatique du gabarit, chaque fois dans la position la plus favorable au-dessus de la surface formant la sole de support. Le gabarit 56 est pourvu d'une éclisse 58, par l'intermédiaire de laquelle ce gabarit 56 est relié à un embout adéquat 59 à l'extrémité du bras 17 du carrousel. La liaison dans l'embout 59 doit être conçue d'une manière telle que la position du gabarit 56 dans le sens radial, c'est-à-dire dans le sens du bras 17 et, dans le sens tangentiel, c'est-à-dire à angle droit par rapport au bras 17, soit établie avec une haute précision par la position du bras 17, tandis que, en hauteur, un certain jeu doit être possible.

Suite au guidage forcé des vitrages à l'aide du dispositif entraîneur décrit, un positionnement très précis des vitrages peut être obtenu d'une manière simple dans le poste de déchargement 7, ce qui est particulièrement important pour le positionnement précis des vitrages dans le poste de bombage suivant.

## Revendications

1. Four continu pour la chauffage de vitrages à leur température de bombage et/ou de trempe, comportant une sole de support à coussin de gaz chaud (3) et un dispositif entraîneur (16,17,56) agissant sur les bords des vitrages (41) pour assurer le transport des vitrages au-dessus de la sole de support à gaz chaud, à partir d'un poste de chargement (6) jusqu'à un poste de déchargement ou de transfert (7), **caractérisé en ce que** la sole de support à coussin de gaz chaud (3) est de forme annulaire et orientée horizontalement et le dispositif entraîneur concentrique à la sole de support à gaz chaud (3), présente des organes entraîneurs (56) parcourant un trajet circulaire, qui saisissent chacun un vitrage en au moins trois points et le guident suivant un trajet circulaire depuis le poste de chargement (6) vers le poste de déchargement (7).

2. Four suivant la revendication 1, **caractérisé en ce que** la partie inférieure du four contenant la sole de support à coussin de gaz chaud (3) est subdivisée en segments (10) dans chacun desquels le flux volumique de gaz produisant le coussin de gaz chaud et la température du gaz peuvent être réglés séparément.

3. Four suivant la revendication 1 ou 2, **caractérisé en ce que** la plaque (25) formant la sole de support à coussin de gaz chaud (3) est percée d'orifices d'éjection de gaz (26) et d'orifices d'aspiration de gaz (27), les orifices d'éjection de gaz (26) étant en communication avec une chambre (28) délimitée par la plaque (25) et par une paroi intermédiaire (29) parallèle à celle-ci, et les orifices d'aspiration de gaz (27) étant en communication, par des tubes (34) traversant la chambre (28), avec une chambre (30) délimitée vers le haut par la paroi intermédiaire (29) et le gaz chaud étant mis en circulation par un ventilateur (31).

4. Four suivant la revendication 3, **caractérisé en ce que**, dans l'orifice d'aspiration du ventilateur (31) installé dans une des chambres (28, 30), est monté un registre de chauffage électrique (32) régissant la température du gaz chaud.

5. Four suivant l'une quelconque des revendications 1 à 4, **caractérisé en ce que** le dispositif d'entraînement est formé d'un carrousel (16) monté à rotation sur l'axe central (18) du four et comportant des bras (17) qui s'étendent radialement et qui, sur leur extrémité, portent chacun un organe entraîneur (56).

6. Four suivant l'une quelconque des revendications 1 à 4, **caractérisé en ce que** le dispositif d'entraînement est formé d'une chaine sans fin guidée le long de la paroi interne du four, à l'extérieur de celui-ci, suivant un trajet circulaire concentrique au four, des organes entraîneurs qui s'étendent dans le four étant montés sur cette chaîne.

7. Four suivant l'une quelconque des revendications 1 à 6, **caractérisé en ce que** les organes entraîneurs pour les vitrages (41) sont chacun formés d'un gabarit (56) en tôle d'acier ou analogue réfractaire d'une forme correspondant à celle des vitrages et sont montés flottants sur la sole de support à gaz chaud (3).

8. Four suivant la revendication 7, **caractérisé en ce que** le gabarit d'entraînement (56) peut être positionné, par l'intermédiaire du mouvement en rotation commandé du dispositif d'entraînement (16,17,56), au moins dans le poste de déchargement (7), avec une précision relativement élevée.

9. Four suivant l'une quelconque des revendications 1 à 8, **caractérisé par** un plateau aspirant (42) installé dans le poste de déchargement (7), au-dessus de la sole de support à gaz chaud (3), et mobile dans le sens radial pour transférer les vitrages (41) chauffés dans un dispositif de traitement (48) installé à côté du four.

10. Four suivant la revendication 9, **caractérisé en ce que** le dispositif de traitement installé à côté du four est un dispositif de bombage et de trempe par contact (48) comprenant une forme de bombage inférieure refroidie à l'eau (49) et une forme de bombage supérieure refroidie à l'eau (50).

## Claims

1. Continuous furnace for heating glazings to their bending and/or tempering temperature, having a hot gas cushion support bed (3) and a driving device (16, 17, 56) acting on the edges of the glazings (41) in order to ensure the transportation of said glazings above the hot gas support bed from a loading station (6) to an unloading or transfer station (7), characterized in that the hot gas cushion support bed (3) is annular and oriented horizontally and the driving device concentric to the hot gas support bed (3) has driving members (56) performing a circular path and each of which seizes a glazing at at least three points and guide it along a circular path from the loading station (6) to the unloading station (7).

2. Furnace according to claim 1, characterized in that the lower part of the furnace containing the hot gas cushion support bed (3) is subdivided into segments (10), in each of which the gas volume flow producing the hot gas cushion and the temperature of the gas can be separately regulated.

3. Furnace according to claim 1 or 2, characterized in that the plate (25) forming the hot gas cushion support bed (3) has gas ejection orifices (26) and gas suction orifices (27), the gas ejection orifices (26) communicating with a chamber (28) defined by the plate (25) and by an intermediate wall (29) parallel thereto, and the gas suction orifices (27) communicate, by tubes (34) traversing the chamber (28), with a chamber (30) upwardly defined by the intermediate wall (29) and the hot gas is circulated by a fan (31).

4. Furnace according to claim 3, characterized in that, in the suction orifice of the fan (31) installed in one of the chambers (28, 30), is fitted an electric heating register (32) controlling the temperature of the hot gas.

5. Furnace according to any one of the claims 1 to 4, characterized in that the drive device is formed by a turntable (16) mounted in rotary manner on the central shaft (18) of the furnace and having arms (17) extending radially and carrying on their end in each case a driving member (56).

6. Furnace according to any one of the claims 1 to 4, characterized in that the drive device is formed by an endless chain guided along the inner wall of the furnace, outside the latter, following a circular path concentric to the furnace, driving members extending into the furnace being fitted on said chain.

7. Furnace according to any one of the claims 1 to 6, characterized in that the driving members for the glazings (41) are in each case formed by a jig (56) made from steel sheeting or a similar refractory material having a shape corresponding to that of the glazings and mounted in floating manner on the hot gas support bed (3).

8. Furnace according to claim 7, characterized in that the drive jig (56) can be positioned, via the controlled rotary movement of the drive device (16, 17, 56), at least in the unloading station (7) with a relatively high precision.

9. Furnace according to any one of the claims 1 to 8, characterized in that a suction plate (42) installed in the unloading station (7) above the hot gas support bed (3) is mobile in the radial direction for transferring the heated glazings (41) into a treatment device (48) installed alongside the furnace.

10. Furnace according to claim 9, characterized in that the treatment device installed alongside the furnace is a contact-based bending and tempering device (48) having a water-cooled, lower bending mould (49) and a water-cooled, upper bending mould (50).

## Patentansprüche

1. Durchlaufofen für die Erwärmung von Glasscheiben auf ihre Biege- und/oder Vorspanntemperatur, mit einem Heißgas-Tragbett (3) und mit einer auf die Kanten der Glasscheiben (41) einwirkenden Mitnehmervorrichtung (16,17,56) zum Transport der Glasscheiben über das Heißgas-Tragbett von einer Auflegestation (6) bis zu einer Entnahme- oder Übergabestation (7), **dadurch gekennzeichnet,** daß das Heißgas-Tragbett (3) kreisringförmig ausgebildet und horizontal ausgerichtet ist, und daß die Mitnehmervorrichtung konzentrisch zum kreisringförmigen Heißgas-Tragbett (3) angeordnet ist und auf einer Kreisbahn geführte Mitnehmer (56) aufweist, die jeweils eine Glasscheibe an wenigstens drei Punkten erfassen und sie auf einer Kreisbahn von der Auflegestation (6) zur Entnahmestation (7) führen.

2. Ofen nach Anspruch 1, dadurch gekennzeichnet, daß der das Heißgas-Tragbett (3) enthaltende Unterteil des Ofens in Segmente (10) unterteilt ist, in denen jeweils der das Heißgaskissen erzeugende Gasvolumenstrom und die Gastemperatur getrennt regelbar sind.

3. Ofen nach Anspruch 1 oder 2, dadurch gekennzeichnet, daß die das Heißgas-Tragbett (3) bildende Platte (25) mit Gasausströmöffnungen (26) und mit Gasabströmöffnungen (27) versehen ist, wobei die Gasausströmöffnungen (26) mit einem von der Platte (25) und einer parallel hierzu angeordneten Zwischenwand (29) begrenzten Kammer (28), und die Gasabströmöffnungen (27) über die Kammer (28) durchdringende Rohre (34) mit einer nach oben durch die Zwischenwand (29) begrenzten Kammer (30) in Verbindung stehen und das heiße Gas durch einen Ventilator (31) im Kreislauf geführt ist.

4. Ofen nach Anspruch 3, dadurch gekennzeichnet, daß im Ansaugstutzen des in einer der Kammern (28,30) angeordneten Ventilators (31) ein die Temperatur des heißen Gases steuerndes elektrisches Heizregister (32) angeordnet ist.

5. Vorrichtung nach einem der Ansprüche 1 bis 4, dadurch gekennzeichnet, daß die Mitnehmervorrichtung aus einem in der Mittelachse (18) des Ofens drehbar gelagerten Drehstern (16) mit sich in radialer Richtung erstreckenden Armen (17) besteht, an deren Enden jeweils ein Mitnehmer (56) angeordnet ist.

6. Vorrichtung nach einem der Ansprüche 1 bis 4, dadurch gekennzeichnet, daß die Mitnehmervorrichtung aus einer entlang der inneren Ofenwand außerhalb des Ofens auf einer zum Ofen konzentrischen Kreisbahn geführten endlosen Kette besteht, an der in den Ofen hineinragende Mitnehmer angeordnet sind.

7. Ofen nach einem der Ansprüche 1 bis 6, dadurch gekennzeichnet, daß die Mitnehmer für die Glasscheiben (41) jeweils aus einer der Form der Glasscheiben entsprechenden Schablone (56) aus hitzebeständigem Stahlblech oder dergleichen bestehen und auf dem Heißgas-Tragbett (3) schwimmend gelagert sind.

8. Ofen nach Anspruch 7, dadurch gekennzeichnet, daß die Mitnehmerschablone (56) über die gesteuerte Drehbewegung der Mitnehmervorrichtung (16,17,56) zumindest in der Entnahmestation (7) mit verhältnismäßig hoher Genauigkeit positionierbar ist.

9. Ofen nach einem der Ansprüche 1 bis 8, gekennzeichnet durch eine in der Entnahmestation (7) oberhalb des Heißgas-Tragbetts (3) in radialer Richtung verschiebbar angeordnete Saugplatte (42) zur Übergabe der erhitzten Glasscheiben (41) in eine neben dem Ofen angeordnete Bearbeitungsvorrichtung (48).

10. Ofen nach Anspruch 9, dadurch gekennzeichnet, daß die neben dem Ofen angeordnete Bearbeitungsvorrichtung eine eine untere wassergekühlte Biegeform (49) und eine obere wassergekühlte Biegeform (50) umfassende Biege- und Kontaktvorspannvorrichtung (48) ist.
